# FASCICULE DE BREVET EUROPEEN

(11) **EP 0 937 408 B1**
(45) Date de publication et mention de la délivrance du brevet: **11.02.2004**
(21) Numéro de dépôt: 99200469.7
(22) Date de dépôt: 20.08.1993
(51) Int. Cl.: A23D 9/00, A23C 11/04

(54) **Produit laitier comprenant une composition lipidique nutritionnelle**
Nahrhafte Lipidzusammensetzung enthaltendes Milchprodukt
Milk product comprising a nutritional lipid composition

(43) Date de publication de la demande: 25.08.1999
(62) Demande divisionnaire de: 93113326.8
(73) Titulaire: SOCIETE DES PRODUITS NESTLE S.A., 1800 Vevey (CH)
(72) Inventeur: Bracco, Umberto, 1800 Vevey (CH); Coiffier, Eric, 1814 La Tour-de Peilz (CH)
(74) Mandataire: Archambault, Jean

(56) Documents cités:
- EP-A- 0 326 198
- EP-A- 0 340 635
- EP-A- 0 404 058
- EP-A- 0 430 870
- EP-A- 0 484 266
- EP-A- 0 494 707
- EP-A- 0 517 425
- WO-A-93/00019
- GB-A- 2 202 726

## Description

La présente invention a trait à un aliment contenant une composition lipidique nutritionnelle.

Les lipides, mis à part leur fonction en tant que source d'énergie, jouent plusieurs rôles en nutrition en tant que source d'acides gras essentiels:
- comme composants indispensables à la structure cellulaire et aux fonctions membranaires,
- comme précurseurs des métabolites éicosanoïdes qui interviennent dans de nombreux systèmes physiologiques comme les systèmes cardio-vasculaire, immunitaire, respiratoire et digestif,
- comme régulateurs des lipides sanguins.

La réponse physiologique à la consommation d'huiles alimentaires dépend de la composition en acides gras de ces huiles. Les acides gras sont classés en différentes familles, n-9, n-6 et n-3 , en fonction de leur structure, c'est à dire selon la présence et la situation des doubles liaisons dans la chaîne carbonée. Chaque famille a une activité propre spécifique, mais il existe des interactions entre les différentes familles pendant le métabolisme. Dans le cas du contrôle des lipides sanguins, il convient de tenir compte de plusieurs critères:
- l'apport alimentaire en acides gras saturés doit être limité en raison de leur influence sur l'augmentation du cholestérol et des lipides totaux,
- un contenu trop élevé en acides gras polyinsaturés dans le régime n'est pas souhaitable en raison d'une part de l'action négative sur le cholestérol des lipoprotéines haute densité (HDL), bénéfiques, et d'autre part des risques liés à la peroxydation des acides gras donnant des effets négatifs au niveau cellulaire,
- les acides gras monoinsaturés ne présentent pas les risques mentionnnés précédemment et ont un effet favorable sur la diminution du cholestérol des lipoprotéines basse densité (LDL), néfastes,
- les fonctions physiologiques des acides gras diffèrent aussi, dans une même famille, selon la longueur de la chaîne carbonée. Par exemple, dans la famille des acides gras n-6, il existe un acide gras, l'acide gammalinolénique (GLA), qui a une activité plus prononcée que les autres membres sur le contrôle des lipides sanguins. Il en est de même pour l'acide éicosapentaénoïque (EPA) dans la famille n-3.

EP-A-0 326 198 concerne une huile de consommation pour salade et à cuire d'origine purement végétale, nutritionnellement équilibrée qui contient une quantité minimale d'acides gras saturés et ne contient pas d'acides gras polyinsaturés à longue chaîne. Le procédé de préparation de l'huile consiste, soit en une resynthèse de triglycérides à partir d'acides gras après leur purification et leur mélange dans les proportions souhaitées avec le glycérol, soit en une élimination des acides gras saturés sur colonne à partir d'huile de tournesol à haute teneur en acide oléique ou de Canola.

EP-A-0 404 058 concerne la mise à disposition d'un mélange lipidique pour l'alimentation des nourrissons et des prématurés qui soit nutritionnellement proche de celui du lait humain, c'est à dire rapidement assimilable, hautement énergétique et susceptible de fournir les lipides membranaires et le cholestérol nécessaires. Le profil des acides gras est caractérisé par la présence d'acides gras polyinsaturés (tri-insaturés et plus) à longue chaîne constitués des acides n-6 arachidonique, gamma-linolénique et dihomo-gammalinolénique et les acides n-3 octadécatétraènique, eicosapentaènoique, docosahexaènoique, par une quantité élevée d'acides gras saturés, de l'ordre de 40 %, dont une part appréciable à chaîne moyenne, par un rapport des tri-insaturés et plus ci-dessus n-6/n-3 de 0,1:1 à 3: 1 et par la présence de lécithine d'oeuf. Le mélange lipidique est riche en cholestérol. Le procédé de préparation du mélange lipidique consiste à chauffer la graisse solide et à la mélanger à chaud avec un émulsifiant et un antioxydant, à ajouter au mélange liquide les acides gras polyinsaturés à longue chaîne et les autres huiles.

Le but de l'invention est de fournir un produit laitier contenant une composition lipidique nutritionnelle en remplacement partiel des matières grasses du dit aliment, dans lequel la dite composition lipidique nutritionnelle est basée sur une combinaison d'huiles élaborée pour garantir les qualités structurales et la performance physiologique optimales, avec un équilibre optimum de substances actives afin d'éviter des charges métaboliques déséquilibrées.

Le produit laitier selon l'invention est caractérisé par le fait qu'il contient une composition lipidique nutritionnelle dont les acides gras des triglycérides comprennent, en poids, au plus 10 % d'acides gras saturés, 50 % à 70 % d'acides gras monoinsaturés et 30 à 40 % d'acides gras polyinsaturés, que les acides gras n-6 représentent 25 à 35 %, que le rapport pondéral des acides gras de la famille n-6 sur ceux de la famille n-3 est 4,5:1 à 8,5:1 et que les acides gras polyinsaturés comprennent une quantité efficace d'acides des familles n-3 et n-6 de degré d'insaturation 3 et plus.

La composition lipidique nutritionnelle tient compte non seulement des activités des acides gras essentiels, mais aussi de l'interaction de chaque acide gras essentiel de la famille n-6, par exemple l'acide linoléique, avec son homologue de la famille n-3, par exemple l'acide alpha-linolénique, d'une déficience enzymatique éventuelle ne permettant pas de transformer ces acides gras en dérivés désaturés supérieurs en C 20 en raison de l'incapacité enzymatique à désaturer ces acides.

La composition lipidique nutritionnelle contient une huile riche en acide oléique qui a une action de sructure et de véhicule des acides gras bio-actifs essentiels tout en étant neutre du point de vue de la bioactivité. La teneur élevée en acide oléique confère au mélange lipidique une bonne stabilité à l'oxydation et à la photo-oxydation, ce qui évite la formation de radicaux oxygénés actifs.

Les huiles de choix répondant à cette exigeance sont de préférence, l'huile d'olive, l'huile d'abricot, les hybrides de tournesol et de carthame à haute teneur en acide oléique, par exemple > à 60% en poids. On peut aussi citer les oléines d'huiles végétales, par exemple de palme, obtenues par fractionnement à sec, par solvant ou par tensioactifs d'huiles et de graisses végétales.

L'huile en question constitue 50 % en poids du mélange lipidique nutritionnel.

La composition lipidique nutritionnelle contient des huiles apportant les acides gras essentiels des familles n-6 et n-3 dans un rapport tenant compte de la plus grande réactivité de ceux de la famille n-3.

Les huiles riches en acide gras de la famille n-6 sont choisies parmi celles riches en acide linoléique, de préférence contenant plus de 60 % en poids de cet acide par rapport aux acides gras totaux, par exemple l'huile de tournesol, l'huile de pépins de raisin, l'huile de passiflore, l'huile de tomate ou l'huile de carthame.

Parmi les huiles de la famille n-6, la composition comprend celles susceptibles de fournir une quantité efficace d'acide de degré d'insaturation au moins 3, par exemple d'acide gamma-linolénique dont le rôle est de pallier à l'insuffisance des désaturases. On peut citer l'huile d'onagre, de bourrache et de préférence l'huile de pépins de cassis.

Comme huiles fournissant les acides gras de la famille n-3, on peut citer celles qui contiennent de préférence plus de 20 % en poids d'acide alpha-linolénique par rapport aux acides gras totaux, par exemple l'huile de colza, l'huile de chia, l'huile de lin, l'huile de kiwi, l'huile de luzerne ou l'huile de rosa mosqueta. On peut également citer celles qui apportent les acides EPA et DHA, par exemple l'huile d'organismes marins.

La composition moyenne des acides gras des triglycérides principaux de la composition lipidique nutritionnelle est la suivante:

| **Acide gras** | **% en poids** | **% en poids** |
|---|---|---|
| C16:0 | 3-8, | de préférence 5 |
| C18:0 | 1-5 | de préférence 3 |
| C18:1 | 50-65 | de préférence 59 |
| C18:2 | 20-35 | de préférence 26 |
| C18:3, n-6 (gamma) | 0,2-1 | de préférence 0,5 |
| C18:3,n-3 (alpha) | 1,5-4 | de préférence 3 |
| C18:4, n-3 | 0,1-0,5 | de préférence 0,2 |
| C20:5, n-3 (EPA) | 0,2-1 | de préférence 0,6 |
| C22:6, n-3 (DHA) | 0,1-0,8 | de préférence 0,4 |

Sur la base de leur compositions respectives en acides gras, les mélanges des huiles ci-après sont préférés:

| **Huile** | **% en poids** | **% en poids** |
|---|---|---|
| Huile de tournesol hybride, de carthame hybride riches en acide oléique, d'olive, d'abricot ou fractions oléines | 45-68, | de préférence 50 |
| | | |
| Huile de tournesol ou de pépins de raisins, de passiflore, de tomate ou de carthame | 8-28 | de préférence 20 |
| | | |
| Huile de pépins de cassis, de bourrache ou d'onagre | 1-10 | de préférence 3 |
| | | |
| Huile de poisson | 1-8 | de préférence 3 |
| | | |
| Huile de colza, de lin, de kiwi, de luzerne, de chia ou de rosa mosqueta | 2-30 | de préférence 24 |

La composition lipidique nutritionnelle peut encore contenir d'autres huiles en quantité mineure, dans le but, par exemple d'améliorer ses propriétés de conservation, par exemple une huile de germes de céréales riche en vitamine E comme antioxydant.

Elle peut en outre contenir des antioxydants liposolubles ou rendus liposolubles, par exemple un mélange d'acide ascorbique et/ou citrique, de lécithine, de tocophérol et de vitamine B.

La composition lipidique nutritionnelle est utilisée dans des produits laitiers, par exemples yaourts, en remplacement partiel de la matière grasse lactique.

Dans un tel aliment, la composition lipidique nutritionnelle représente 50% en poids.

Les exemples ci-après illustrent l'invention. Dans ceux-ci, les pourcentages et parties sont pondéraux sauf indication contraire.

### Exemple 1

### Composition lipidique nutritionnelle pour aliment

On mélange sous agitation et sous azote les huiles raffinées ci-après dans les proportions indiquées et dans l'ordre décroissant des quantités respectives. L'incorporation des antioxydants a lieu préalablement au mélange dans l'huile de tournesol hybride en tant que solution mère.

| **Huile** | **%** |
|---|---|
| Huile de tournesol hybride contenant 77,4 % d'acide oléique en poids des acides gras (HOSFO) | 50 |
| | |
| Huile de colza | 24 |
| | |
| Huile de tournesol (SFO) | 20 |
| | |
| Huile de pépins de cassis | 3 |
| | |
| Huile de poisson | 3 |

Pour ce faire, dans un réacteur en acier inoxydable muni d'un système de double manteau à circulation de fluides pour thermostatisation et d'un agitateur à vitesse variable, on additionne l'huile de pépins de cassis et l'huile de poisson aux huiles de tournesol hybride, de colza et de tournesol standard en évitant des températures supérieures à 30°C.
L'huile de tournesol hybride sert de solution mère à un antioxydant, p.ex. la vitamine E (tocopherol et ses esters) un extrait naturel à pouvoir antioxydant (p. ex. d'épices) dans des proportions allant jusqu'à 1'000 ppm (partie par million) calculées sur le mélange d'huile.
En circuit fermé, on conditionne le mélange en fûts à surface plastifiée, préférablement d'une capacité de 25 kg et sous atmosphère d'azote pour éviter les dégradations oxydatives liées à l'insaturation du mélange.

Le tableau 1 ci-après donne la composition du mélange.

**TABLEAU 1**

| Acides gras (en %) | HOSFO | SFO | Huile de cassis | Huile de poisson | Huile de colza | Mélange |
|---|---|---|---|---|---|---|
| C14:0 | | | | 5,7 | | 0,17 |
| C16:0 | 4,0 | 6,5 | 6,2 | 12,5 | 4,9 | 5,04 |
| C16:1 | | 0,1 | 0,4 | 7,4 | 0,2 | 0,30 |
| C18:0 | 3,8 | 4,2 | 1,5 | 1,7 | 1,7 | 3,24 |
| C18:1 | 77,4 | 25,5 | 12,9 | 11,7 | 59,3 | 58,77 |
| C18:2 (n-6) | 13,3 | 63,0 | 45,7 | 1,3 | 22,6 | 26,08 |
| C18:3 (n-3) | 0,1 | | 13,9 | 0,9 | 9,6 | 2,80 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,7 | 0,27 |
| C20:1 | 0,2 | | 0,5 | 5,5 | 0,9 | 0,50 |
| C20:5 (n-3) | | | | 19,5 | | 0,58 |
| C22:0 | 1,0 | 0,6 | | | 0,1 | 0,64 |
| C22:1 | | | | 4,0 | | 0,12 |
| C22:5 (n-3) | | | | 2,6 | | 0,08 |
| C22:6 (n-3) | | | | 12,2 | | 0,37 |
| | | | | | | |
| % d'huile | 50 | 20 | 3 | 3 | 24 | 100 |
| | | | | | | |
| AG saturés (%) | | | | | | 9,37 |
| AG monoinsat (%) | | | | | | 59,69 |
| AG polyinsat (%) | | | | | | 30,60 |
| Total AG n-6 (%) | | | | | | 26,58 |
| Total AG n-3 (%) | | | | | | 4,02 |
| | | | | | | |
| Rapport n-6/n-3 | | | | | | 6,61 |

### Exemples 2-22

On prépare le mélange d'huiles comme à l'exemple 1. Les tableaux 2 à 22 donnent la composition des mélanges.

**TABLEAU 2**

| Acides gras (en %) | HOSFO | SFO | Huile de cassis | Huile de poisson | Huile de colza | Mélange |
|---|---|---|---|---|---|---|
| C14:0 | | | | 5,7 | | 0,11 |
| C16:0 | 4,0 | 6,5 | 6,2 | 12,5 | 4,9 | 4,95 |
| C16:1 | | 0,1 | 0,4 | 7,4 | 0,2 | 0,23 |
| C18:0 | 3,8 | 4,2 | 1,5 | 1,7 | 1,7 | 3,25 |
| C18:1 | 77,4 | 25,5 | 12,9 | 11,7 | 59,3 | 59,71 |
| C18:2 (n-6) | 13,3 | 63,0 | 45,7 | 1,3 | 22,6 | 26,07 |
| C18:3 (n-3) | 0,1 | | 13,9 | 0,9 | 9,6 | 2,84 |
| C18:3 (n-6) | | 0,1 | 15,7 | 0,2 | | 0,34 |
| C18:4 (n-3) | | | 3,0 | 3,5 | | 0,13 |
| C20:0 | 0,2 | | | 0,1 | 0,7 | 0,28 |
| C20:1 | 0,2 | | 0,5 | 5,5 | 0,9 | 0,45 |
| C20:5 (n-3) | | | | 19,5 | 0,39 | 0,65 |
| C22:0 | 1,0 | 0,6 | | | | 0,1 |
| C22:1 | | | | 4,0 | | 0,08 |
| C22:5 (n-3) | | | | 2,6 | | 0,05 |
| C22:6 (n-3) | | | | 12,2 | | 0,24 |
| | | | | | | |
| % d'huile | 50 | 20 | 2 | 2 | 26 | 100 |
| | | | | | | |
| AG saturés (%) | | | | | | 9,24 |
| AG monoinsat (%) | | | | | | 60,47 |
| AG polyinsat (%) | | | | | | 30,06 |
| Total AG n-6 (%) | | | | | | 26,40 |
| Total AG n-3 (%) | | | | | | 3,66 |
| | | | | | | |
| Rapport n-6/n-3 | | | | | | 7,22 |

**TABLEAU 3**

| Acides gras (en %) | HOSFO | SFO | Huile de cassis | Huile de poisson | Huile de colza | Mélange |
|---|---|---|---|---|---|---|
| C14:0 | | | | 5,7 | | 0,23 |
| C16:0 | 4,0 | 6,5 | 6,2 | 12,5 | 4,9 | 5,13 |
| C16:1 | | 0,1 | 0,4 | 7,4 | 0,2 | 0,38 |
| C18:0 | 3,8 | 4,2 | 1,5 | 1,7 | 1,7 | 3,24 |
| C18:1 | 77,4 | 25,5 | 12,9 | 11,7 | 59,3 | 57,83 |
| C18:2 (n-6) | 13,3 | 63,0 | 45,7 | 1,3 | 22,6 | 26,10 |
| C18:3 (n-3) | 0,1 | | 13,9 | 0,9 | 9,6 | 2,75 |
| C18:3 (n-6) | | 0,1 | 15,7 | 0,2 | | 0,66 |
| C18:4 (n-3) | | | 3,0 | 3,5 | | 0,26 |
| C20:0 | 0,2 | | | 0,1 | 0,7 | 0,26 |
| C20:1 | 0,2 | | 0,5 | 5,5 | 0,9 | 0,54 |
| C20:5 (n-3) | | | | 19,5 | | 0,78 |
| C22:0 | 1,0 | 0,6 | | | 0,1 | 0,64 |
| C22:1 | | | | 4,0 | | 0,16 |
| C22:5 (n-3) | | | | 2,6 | | 0,10 |
| C22:6 (n-3) | | | | 12,2 | | 0,49 |
| | | | | | | |
| % d'huile | 50 | 20 | 4 | 4 | 22 | 100 |
| | | | | | | |
| AG saturés (%) | | | | | | 9,50 |
| AG monoinsat (%) | | | | | | 58,90 |
| AG polyinsat (%) | | | | | | 31,14 |
| Total AG n-6 (%) | | | | | | 26,76 |
| Total AG n-3 (%) | | | | | | 4,39 |
| | | | | | | |
| Rapport n-6/n-3 | | | | | | 6,10 |

**TABLEAU 4**

| Acides gras (en %) | HOSFO | SFO | Huile de cassis | Huile de poisson | Huile de colza | Mélange |
|---|---|---|---|---|---|---|
| C14:0 | | | | 5,7 | | 0,29 |
| C16:0 | 4,0 | 6,5 | 6,2 | 12,5 | 4,9 | 5,21 |
| C16:1 | | 0,1 | 0,4 | 7,4 | 0,2 | 0,45 |
| C18:0 | 3,8 | 4,2 | 1,5 | 1,7 | 1,7 | 3,24 |
| C18:1 | 77,4 | 25,5 | 12,9 | 11,7 | 59,3 | 56,89 |
| C18:2 (n-6) | 13,3 | 63,0 | 45,7 | 1,3 | 22,6 | 26,12 |
| C18:3 (n-3) | 0,1 | | 13,9 | 0,9 | 9,6 | 2,71 |
| C18:3 (n-6) | | 0,1 | 15,7 | 0,2 | | 0,81 |
| C18:4 (n-3) | | | 3,0 | 3,5 | | 0,33 |
| C20:0 | 0,2 | | | 0,1 | 0,7 | 0,24 |
| C20:1 | 0,2 | | 0,5 | 5,5 | 0,9 | 0,58 |
| C20:5 (n-3) | | | | 19,5 | | 0,97 |
| C22:0 | 1,0 | 0,6 | | | 0,1 | 0,64 |
| C22:1 | | | | 4,0 | | 0,20 |
| C22:5 (n-3) | | | | 2,6 | | 0,13 |
| C22:6 (n-3) | | | | 12,2 | | 0,61 |
| | | | | | | |
| % d'huile | 50 | 20 | 5 | 5 | 20 | 100 |
| | | | | | | |
| AG saturés (%) | | | | | | 9,63 |
| AG monoinsat (%) | | | | | | 58,12 |
| AG polyinsat (%) | | | | | | 31,69 |
| Total AG n-6 (%) | | | | | | 26,94 |
| Total AG n-3 (%) | | | | | | 4,75 |
| | | | | | | |
| Rapport n-6/n-3 | | | | | | 5,67 |

**TABLEAU 5**

| Acides gras (en %) | HOSFO | Huile de tomates | Huile de cassis | Huile de poisson | Huile de colza | Mélange |
|---|---|---|---|---|---|---|
| C14:0 | | 0,3 | | 5,7 | | 0,23 |
| C16:0 | 4,0 | 12,9 | 6,2 | 12,5 | 4,9 | 6,32 |
| C16:1 | | 0,1 | 0,4 | 7,4 | 0,2 | 0,30 |
| C18:0 | 3,8 | 4,4 | 1,5 | 1,7 | 1,7 | 3,28 |
| C18:1 | 77,4 | 19,0 | 12,9 | 11,7 | 59,3 | 57,47 |
| C18:2 (n-6) | 13,3 | 60,9 | 45,7 | 1,3 | 22,6 | 25,66 |
| C18:3 (n-3) | 0,1 | 2,1 | 13,9 | 0,9 | 9,6 | 3,22 |
| C18:3 (n-6) | | | 15,7 | 0,2 | | 0,48 |
| C18:4 (n-3) | | | 3,0 | 3,5 | | 0,20 |
| C20:0 | 0,2 | | | 0,1 | 0,7 | 0,27 |
| C20:1 | 0,2 | | 0,5 | 5,5 | 0,9 | 0,50 |
| C20:5 (n-3) | | | | 19,5 | | 0,58 |
| C22:0 | 1,0 | | | | 0,1 | 0,52 |
| C22:1 | | | | 4,0 | | 0.12 |
| C22:5 (n-3) | | | | 2,6 | | 0,08 |
| C22:6 (n-3) | | | | 12,2 | | 0,37 |
| | | | | | | |
| % d'huile | 50 | 20 | 3 | 3 | 24 | 100 |
| | | | | | | |
| AG saturés (%) | | | | | | 10,63 |
| AG monoinsat (%) | | | | | | 58,39 |
| AG polyinsat (%) | | | | | | 30,58 |
| Total AG n-6 (%) | | | | | | 26,14 |
| Total AG n-3 (%) | | | | | | 4,44 |
| | | | | | | |
| Rapport n-6/n-3 | | | | | | 5,88 |

**TABLEAU 6**

| Acides gras (en %) | HOSFO | Huile de passiflore | Huile de cassis | Huile de poisson | Huile de colza | Mélange |
|---|---|---|---|---|---|---|
| C14:0 | | | | 5,7 | | 0,17 |
| C16:0 | 4,0 | 11,0 | 6,2 | 12,5 | 4,9 | 5,94 |
| C16:1 | | 0,1 | 0,4 | 7,4 | 0,2 | 0,30 |
| C18:0 | 3,8 | 2,6 | 1,5 | 1,7 | 1,7 | 2,92 |
| C18:1 | 77,4 | 15,0 | 12,9 | 11,7 | 59,3 | 56,67 |
| C18:2 (n-6) | 13,3 | 70,9 | 45,7 | 1,3 | 22,6 | 27,66 |
| C18:3 (n-3) | 0,1 | 0,4 | 13,9 | 0,9 | 9,6 | 2,88 |
| C18:3 (n-6) | | | 15,7 | 0,2 | | 0,48 |
| C18:4 (n-3) | | | 3,0 | 3,5 | | 0,20 |
| C20:0 | 0,2 | | | 0,1 | 0,7 | 0,27 |
| C20:1 | 0,2 | | 0,5 | 5,5 | 0,9 | 0,50 |
| C20:5 (n-3) | | | | 19,5 | | 0,58 |
| C22:0 | 1,0 | | | | 0,1 | 0,52 |
| C22:1 | | | | 4,0 | | 0,12 |
| C22:5 (n-3) | | | | 2,6 | | 0,08 |
| C22:6 (n-3) | | | | 12,2 | | 0,37 |
| | | | | | | |
| % d'huile | 50 | 20 | 3 | 3 | 24 | 100 |
| | | | | | | |
| AG saturés (%) | | | | | | 9,83 |
| AG monoinsat (%) | | | | | | 57,59 |
| AG polyinsat (%) | | | | | | 32,24 |
| Total AG n-6 (%) | | | | | | 28,14 |
| Total AG n-3 (%) | | | | | | 4,10 |
| | | | | | | |
| Rapport n-6/n-3 | | | | | | 6,86 |

**TABLEAU 7**

| Acides gras (en %) | Huile d' abricot | SFO | Huile de cassis | Huile de poisson | Huile de colza | Mélange |
|---|---|---|---|---|---|---|
| C14:0 | | | | 5,7 | | 0,17 |
| C16:0 | 4,8 | 6,5 | 6,2 | 12,5 | 4,9 | 5,28 |
| C16:1 | 0,7 | 0,1 | 0,4 | 7,4 | 0,2 | 0,66 |
| C18:0 | 1,1 | 4,2 | 1,5 | 1,7 | 1,7 | 1,64 |
| C18:1 | 62,5 | 25,5 | 12,9 | 11,7 | 59,3 | 54,70 |
| C18:2 (n-6) | 30,8 | 63,0 | 45,7 | 1,3 | 22,6 | 30,79 |
| C18:3 (n-3) | 0,1 | | 13,9 | 0,9 | 9,6 | 3,76 |
| C18:3 (n-6) | | 0,1 | 15,7 | 0,2 | | 0,49 |
| C18:4 (n-3) | | | 3,0 | 3,5 | | 0,20 |
| C20:0 | | | | 0,1 | 0,7 | 0,24 |
| C20:1 | | | 0,5 | 5,5 | 0,9 | 0,49 |
| C20:5 (n-3) | | | | 19,5 | | 0,58 |
| C22:0 | | 0,6 | | | 0,1 | 0,09 |
| C22:1 | | | | 4,0 | | 0,12 |
| C22:5 (n-3) | | | | 2,6 | | 0,08 |
| C22:6 (n-3) | | | | 12,2 | | 0,37 |
| | | | | | | |
| % d'huile | 50 | 10 | 3 | 3 | 34 | 100 |
| | | | | | | |
| AG saturés (%) | | | | | | 7,43 |
| AG monoinsat (%) | | | | | | 55,97 |
| AG polyinsat (%) | | | | | | 36,26 |
| Total AG n-6 (%) | | | | | | 31,28 |
| Total AG n-3 (%) | | | | | | 4,98 |
| | | | | | | |
| Rapport n-6/n-3 | | | | | | 6,28 |

**TABLEAU 8**

| Acides gras (en %) | HOSFO | SFO | Huile de cassis | Huile de poisson | Huile de kiwi | Mélange |
|---|---|---|---|---|---|---|
| C14:0 | | | | 5,7 | | 0,17 |
| C16:0 | 4,0 | 6,5 | 6,2 | 12,5 | 5,0 | 5,03 |
| C16:1 | | 0,1 | 0,4 | 7,4 | | 0,26 |
| C18:0 | 3,8 | 4,2 | 1,5 | 1,7 | 2,5 | 3,74 |
| C18:1 | 77,4 | 25,5 | 12,9 | 11,7 | 11,9 | 57,52 |
| C18:2 (n-6) | 13,3 | 63,0 | 45,7 | 1,3 | 15,0 | 27,38 |
| C18:3 (n-3) | 0,1 | | 13,9 | 0,9 | 64,3 | 2,44 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,4 | 0,14 |
| C20:1 | 0,2 | | 0,5 | 5,5 | 0,3 | 0,32 |
| C20:5 (n-3) | | | | 19,5 | | 0,58 |
| C22:0 | 1,0 | 0,6 | | | 0,2 | 0,81 |
| C22:1 | | | | 4,0 | 0,1 | 0,12 |
| C22:5 (n-3) | | | | 2,6 | | 0,08 |
| C22:6 (n-3) | | | | 12,2 | | 0,37 |
| | | | | | | |
| % d'huile | 64 | 27 | 3 | 3 | 3 | 100 |
| | | | | | | |
| AG saturés (%) | | | | | | 9,88 |
| AG monoinsat (%) | | | | | | 58,22 |
| AG polyinsat (%) | | | | | | 31,55 |
| Total AG n-6 (%) | | | | | | 27,89 |
| Total AG n-3 (%) | | | | | | 3,66 |
| | | | | | | |
| Rapport n-6/n-3 | | | | | | 7,62 |

**TABLEAU 9**

| Acides gras (en %) | HOSFO | SFO | Huile de cassis | Huile de poisson | Huile de kiwi | Mélange |
|---|---|---|---|---|---|---|
| C14:0 | | | | 5,7 | | 0,17 |
| C16:0 | 4,0 | 6,5 | 6,2 | 12,5 | 5,0 | 5,01 |
| C16:1 | | 0,1 | 0,4 | 7,4 | | 0,26 |
| C18:0 | 3,8 | 4,2 | 1,5 | 1,7 | 2,5 | 3,72 |
| C18:1 | 77,4 | 25,5 | 12,9 | 11,7 | 11,9 | 57,38 |
| C18:2 (n-6) | 13,3 | 63,0 | 45,7 | 1,3 | 15,0 | 26,90 |
| C18:3 (n-3) | 0,1 | | 13,9 | 0,9 | 64,3 | 3,08 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,4 | 0,15 |
| C20:1 | 0,2 | | 0,5 | 5,5 | 0,3 | 0,32 |
| C20:5 (n-3) | | | | 19,5 | | 0,58 |
| C22:0 | 1,0 | 0,6 | | | 0,2 | 0,80 |
| C22:1 | | | | 4,0 | 0,1 | 0,12 |
| C22:5 (n-3) | | | | 2,6 | | 0,08 |
| C22:6 (n-3) | | | | 12,2 | | 0,37 |
| | | | | | | |
| % d'huile | 64 | 26 | 3 | 3 | 4 | 100 |
| | | | | | | |
| AG saturés (%) | | | | | | 9,85 |
| AG monoinsat (%) | | | | | | 58,08 |
| AG polyinsat (%) | | | | | | 31,71 |
| Total AG n-6 (%) | | | | | | 27,41 |
| Total AG n-3 (%) | | | | | | 4,30 |
| | | | | | | |
| Rapport n-6/n-3 | | | | | | 6,37 |

**TABLEAU 10**

| Acides gras (en %) | HOSFO | SFO | Huile de cassis | Huile de poisson | Huile de kiwi | Mélange |
|---|---|---|---|---|---|---|
| C14:0 | | | | 5,7 | | 0,23 |
| C16:0 | 4,0 | 6,5 | 6,2 | 12,5 | 5,0 | 5,07 |
| C16:1 | | 0,1 | 0,4 | 7,4 | | 0,34 |
| C18:0 | 3,8 | 4,2 | 1,5 | 1,7 | 2,5 | 3,67 |
| C18:1 | 77,4 | 25,5 | 12,9 | 11,7 | 11,9 | 57,12 |
| C18:2 (n-6) | 13,3 | 63,0 | 45,7 | 1,3 | 15,0 | 26,11 |
| C18:3 (n-3) | 0,1 | | 13,9 | 0,9 | 64,3 | 3,23 |
| C18:3 (n-6) | | 0,1 | 15,7 | 0,2 | | 0,66 |
| C18:4 (n-3) | | | 3,0 | 3,5 | | 0,26 |
| C20:0 | 0,2 | | | 0,1 | 0,4 | 0,15 |
| C20:1 | 0,2 | | 0,5 | 5,5 | 0,3 | 0,38 |
| C20:5 (n-3) | | | | 19,5 | | 0,78 |
| C22:0 | 1,0 | 0,6 | | | 0,2 | 0,79 |
| C22:1 | | | | 4,0 | 0,1 | 0,16 |
| C22:5 (n-3) | | | | 2,6 | | 0,10 |
| C22:6 (n-3) | | | | 12,2 | | 0,49 |
| | | | | | | |
| % d'huile | 64 | 24 | 4 | 4 | 4 | 100 |
| | | | | | | |
| AG saturés (%) | | | | | | 9,90 |
| AG monoinsat (%) | | | | | | 58,00 |
| AG polyinsat (%) | | | | | | 31,63 |
| Total AG n-6 (%) | | | | | | 26,77 |
| Total AG n-3 (%) | | | | | | 4,86 |
| | | | | | | |
| Rapport n-6/n-3 | | | | | | 5,51 |

**TABLEAU 11**

| Acides gras (en %) | HOSFO | SFO | Huile de cassis | Huile de poisson | Huile de kiwi | Mélange |
|---|---|---|---|---|---|---|
| C14:0 | | | | 5,7 | | 0,29 |
| C16:0 | 4,0 | 6,5 | 6,2 | 12,5 | 5,0 | 5,12 |
| C16:1 | | 0,1 | 0,4 | 7,4 | | 0,41 |
| C18:0 | 3,8 | 4,2 | 1,5 | 1,7 | 2,5 | 3,62 |
| C18:1 | 77,4 | 25,5 | 12,9 | 11,7 | 11,9 | 56,85 |
| C18:2 (n-6) | 13,3 | 63,0 | 45,7 | 1,3 | 15,0 | 25,32 |
| C18:3 (n-3) | 0,1 | | 13,9 | 0,9 | 64,3 | 3,38 |
| C18:3 (n-6) | | 0,1 | 15,7 | 0,2 | | 0,82 |
| C18:4 (n-3) | | | 3,0 | 3,5 | | 0,33 |
| C20:0 | 0,2 | | | 0,1 | 0,4 | 0,15 |
| C20:1 | 0,2 | | 0,5 | 5,5 | 0,3 | 0,44 |
| C20:5 (n-3) | | | | 19,5 | | 0,97 |
| C22:0 | 1,0 | 0,6 | | | 0,2 | 0,78 |
| C22:1 | | | | 4,0 | 0,1 | 0,20 |
| C22:5 (n-3) | | | | 2,6 | | 0,13 |
| C22:6 (n-3) | | | | 12,2 | | 0,61 |
| | | | | | | |
| % d'huile | 64 | 22 | 5 | 5 | 4 | 100 |
| | | | | | | |
| AG saturés (%) | | | | | | 9,96 |
| AG monoinsat (%) | | | | | | 57,91 |
| AG polyinsat (%) | | | | | | 31,55 |
| Total AG n-6 (%) | | | | | | 26,14 |
| Total AG n-3 (%) | | | | | | 5,42 |
| | | | | | | |
| Rapport n-6/n-3 | | | | | | 4,83 |

**TABLEAU 12**

| Acides gras (en %) | HOSFO | SFO | Huile de cassis | Huile de poisson | Huile de chia | Mélange |
|---|---|---|---|---|---|---|
| C14:0 | | | | 5,7 | | 0,17 |
| C16:0 | 4,0 | 6,5 | 6,2 | 12,5 | 7,0 | 5,09 |
| C16:1 | | 0,1 | 0,4 | 7,4 | | 0,26 |
| C18:0 | 3,8 | 4,2 | 1,5 | 1,7 | 3,6 | 3,77 |
| C18:1 | 77,4 | 25,5 | 12,9 | 11,7 | 7,6 | 57,39 |
| C18:2 (n-6) | 13,3 | 63,0 | 45,7 | 1,3 | 17,6 | 27,46 |
| C18:3 (n-3) | 0,1 | | 13,9 | 0,9 | 61,7 | 2,36 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,3 | 0,14 |
| C20:1 | 0,2 | | 0,5 | 5,5 | 0,3 | 0,32 |
| C20:5 (n-3) | | | | 19,5 | | 0,58 |
| C22:0 | 1,0 | 0,6 | | | | 0,80 |
| C22:1 | | | | 4,0 | | 0,12 |
| C22:5 (n-3) | | | | 2,6 | | 0,08 |
| C22:6 (n-3) | | | | 12,2 | | 0,37 |
| | | | | | | |
| % d'huile | 64 | 27 | 3 | 3 | | 3 100 |
| | | | | | | |
| AG saturés (%) | | | | | | 9,97 |
| AG monoinsat (%) | | | | | | 58,09 |
| AG polyinsat (%) | | | | | | 31,55 |
| Total AG n-6 (%) | | | | | | 27,96 |
| Total AG n-3 (%) | | | | | | 3,58 |
| | | | | | | |
| Rapport n-6/n-3 | | | | | | 7,80 |

**TABLEAU 13**

| Acides gras (en %) | HOSFO | SFO | Huile de cassis | Huile de poisson | Huile de chia | Mélange |
|---|---|---|---|---|---|---|
| C14:0 | | | | 5,7 | | 0,17 |
| C16:0 | 4,0 | 6,5 | 6,2 | 12,5 | 7,0 | 5,09 |
| C16:1 | | 0,1 | 0,4 | 7,4 | | 0,26 |
| C18:0 | 3,8 | 4,2 | 1,5 | 1,7 | 3,6 | 3,76 |
| C18:1 | 77,4 | 25,5 | 12,9 | 11,7 | 7,6 | 57,21 |
| C18:2 (n-6) | 13,3 | 63,0 | 45,7 | 1,3 | 17,6 | 27,01 |
| C18:3 (n-3) | 0,1 | | 13,9 | 0,9 | 61,7 | 2,98 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,3 | 0,14 |
| C20:1 | 0,2 | | 0,5 | 5,5 | 0,3 | 0,32 |
| C20:5 (n-3) | | | | 19,5 | | 0,58 |
| C22:0 | 1,0 | 0,6 | | | | 0,80 |
| C22:1 | | | | 4,0 | | 0,12 |
| C22:5 (n-3) | | | | 2,6 | | 0,08 |
| C22:6 (n-3) | | | | 12,2 | | 0,37 |
| | | | | | | |
| % d'huile | 64 | 26 | 3 | 3 | 4 | 100 |
| | | | | | | |
| AG saturés (%) | | | | | | 9,96 |
| AG monoinsat (%) | | | | | | 57,91 |
| AG polyinsat (%) | | | | | | 31,71 |
| Total AG n-6 (%) | | | | | | 27,51 |
| Total AG n-3 (%) | | | | | | 4,20 |
| | | | | | | |
| Rapport n-6/n-3 | | | | | | 6,55 |

**TABLEAU 14**

| Acides gras (en %) | HOSFO | SFO | Huile de cassis | Huile de poisson | Huile de chia | Mélange |
|---|---|---|---|---|---|---|
| C14:0 | | | | 5,7 | | 0,23 |
| C16:0 | 4,0 | 6,5 | 6,2 | 12,5 | 7,0 | 5,15 |
| C16:1 | | 0,1 | 0,4 | 7,4 | | 0,34 |
| C18:0 | 3,8 | 4,2 | 1,5 | 1,7 | 3,6 | 3,71 |
| C18:1 | 77,4 | 25,5 | 12,9 | 11,7 | 7,6 | 56,94 |
| C18:2 (n-6) | 13,3 | 63,0 | 45,7 | 1,3 | 17,6 | 26,22 |
| C18:3 (n-3) | 0,1 | | 13,9 | 0,9 | 61,7 | 3,12 |
| C18:3 (n-6) | | 0,1 | 15,7 | 0,2 | | 0,66 |
| C18:4 (n-3) | | | 3,0 | 3,5 | | 0,26 |
| C20:0 | 0,2 | | | 0,1 | 0,3 | 0,14 |
| C20:1 | 0,2 | | 0,5 | 5,5 | 0,3 | 0,38 |
| C20:5 (n-3) | | | | 19,5 | | 0,78 |
| C22:0 | 1,0 | 0,6 | | | | 0,78 |
| C22:1 | | | | 4,0 | | 0,16 |
| C22:5 (n-3) | | | | 2,6 | | 0,10 |
| C22:6 (n-3) | | | | 12,2 | | 0,49 |
| | | | | | | |
| % d'huile | 64 | 24 | 4 | 4 | 4 | 100 |
| | | | | | | |
| AG saturés (%) | | | | | | 10,02 |
| AG monoinsat (%) | | | | | | 57,82 |
| AG polyinsat (%) | | | | | | 31,63 |
| Total AG n-6 (%) | | | | | | 26,88 |
| Total AG n-3 (%) | | | | | | 4,76 |
| | | | | | | |
| Rapport n-6/n-3 | | | | | | 5,65 |

**TABLEAU 15**

| Acides gras (en %) | HOSFO | SFO | Huile de cassis | Huile de poisson | Huile de chia | Mélange |
|---|---|---|---|---|---|---|
| C14:0 | | | | 5,7 | | 0,29 |
| C16:0 | 4,0 | 6,5 | 6,2 | 12,5 | 7,0 | 5,21 |
| C16:1 | | 0,1 | 0,4 | 7,4 | | 0,41 |
| C18:0 | 3,8 | 4,2 | 1,5 | 1,7 | 3,6 | 3,66 |
| C18:1 | 77,4 | 25,5 | 12,9 | 11,7 | 7,6 | 56,68 |
| C18:2 (n-6) | 13,3 | 63,0 | 45,7 | 1,3 | 17,6 | 25,43 |
| C18:3 (n-3) | 0,1 | | 13,9 | 0,9 | 61,7 | 3,27 |
| C18:3 (n-6) | | 0,1 | 15,7 | 0,2 | | 0,82 |
| C18:4 (n-3) | | | 3,0 | 3,5 | | 0,33 |
| C20:0 | 0,2 | | | 0,1 | 0,3 | 0,15 |
| C20:1 | 0,2 | | 0,5 | 5,5 | 0,3 | 0,44 |
| C20:5 (n-3) | | | | 19,5 | | 0,97 |
| C22:0 | 1,0 | 0,6 | | | | 0,77 |
| C22:1 | | | | 4,0 | | 0,20 |
| C22:5 (n-3) | | | | 2,6 | | 0,13 |
| C22:6 (n-3) | | | | 12,2 | | 0,61 |
| | | | | | | |
| % d'huile | 64 | 22 | 5 | 5 | 4 | 100 |
| | | | | | | |
| AG saturés (%) | | | | | | 10,07 |
| AG monoinsat (%) | | | | | | 57,73 |
| AG polyinsat (%) | | | | | | 31,56 |
| Total AG n-6 (%) | | | | | | 26,24 |
| Total AG n-3 (%) | | | | | | 5,31 |
| | | | | | | |
| Rapport n-6/n-3 | | | | | | 4,94 |

**TABLEAU 16**

| Acides gras (en %) | HOSFO | SFO | Huile de cassis | Huile de poisson | Huile de lin | Mélange |
|---|---|---|---|---|---|---|
| C14:0 | | | | 5,7 | | 0,17 |
| C16:0 | 4,0 | 6,5 | 6,2 | 12,5 | 6,0 | 5,06 |
| C16:1 | | 0,1 | 0,4 | 7,4 | | 0,26 |
| C18:0 | 3,8 | 4,2 | 1,5 | 1,7 | 4,0 | 3,78 |
| C18:1 | 77,4 | 25,5 | 12,9 | 11,7 | 22,0 | 57,82 |
| C18:2 (n-6) | 13,3 | 63,0 | 45,7 | 1,3 | 16,0 | 27,41 |
| C18:3 (n-3) | 0,1 | | 13,9 | 0,9 | 52,0 | 2,07 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | | 0,13 |
| C20:1 | 0,2 | | 0,5 | 5,5 | | 0,31 |
| C20:5 (n-3) | | | | 19,5 | | 0,58 |
| C22:0 | 1,0 | 0,6 | | | | 0,80 |
| C22:1 | | | | 4,0 | | 0,12 |
| C22:5 (n-3) | | | | 2,6 | | 0,08 |
| C22:6 (n-3) | | | | 12,2 | | 0,37 |
| | | | | | | |
| % d'huile | 64 | 27 | 3 | 3 | 3 | 100 |
| | | | | | | |
| AG saturés (%) | | | | | | 9,94 |
| AG monoinsat (%) | | | | | | 58,51 |
| AG polyinsat (%) | | | | | | 31,21 |
| Total AG n-6 (%) | | | | | | 27,92 |
| Total AG n-3 (%) | | | | | | 3,29 |
| | | | | | | |
| Rapport n-6/n-3 | | | | | | 8,48 |

**TABLEAU 17**

| Acides gras (en %) | HOSFO | SFO | Huile de cassis | Huile de poisson | Huile de lin | Mélange |
|---|---|---|---|---|---|---|
| C14:0 | | | | 5,7 | | 0,17 |
| C16:0 | 4,0 | 6,5 | 6,2 | 12,5 | 6,0 | 5,05 |
| C16:1 | | 0,1 | 0,4 | 7,4 | | 0,26 |
| C18:0 | 3,8 | 4,2 | 1,5 | 1,7 | 4,0 | 3,78 |
| C18:1 | 77,4 | 25,5 | 12,9 | 11,7 | 22,0 | 57,78 |
| C18:2 (n-6) | 13,3 | 63,0 | 45,7 | 1,3 | 16,0 | 26,94 |
| C18:3 (n-3) | 0,1 | | 13,9 | 0,9 | 52,0 | 2,59 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | | 0,13 |
| C20:1 | 0,2 | | 0,5 | 5,5 | | 0,31 |
| C20:5 (n-3) | | | | 19,5 | | 0,58 |
| C22:0 | 1,0 | 0,6 | | | | 0,80 |
| C22:1 | | | | 4,0 | | 0,12 |
| C22:5 (n-3) | | | | 2,6 | | 0,08 |
| C22:6 (n-3) | | | | 12,2 | | 0,37 |
| | | | | | | |
| % d'huile | 64 | 26 | 3 | 3 | 4 | 100 |
| | | | | | | |
| AG saturés (%) | | | | | | 9,93 |
| AG monoinsat (%) | | | | | | 58,47 |
| AG polyinsat (%) | | | | | | 31,26 |
| Total AG n-6 (%) | | | | | | 27,45 |
| Total AG n-3 (%) | | | | | | 3,81 |
| | | | | | | |
| Rapport n-6/n-3 | | | | | | 7,20 |

**TABLEAU 18**

| Acides gras (en %) | HOSFO | SFO | Huile de cassis | Huile de poisson | Huile de lin | Mélange |
|---|---|---|---|---|---|---|
| C14:0 | | | | 5,7 | | 0,17 |
| C16:0 | 4,0 | 6,5 | 6,2 | 12,5 | 6,0 | 5,05 |
| C16:1 | | 0,1 | 0,4 | 7,4 | | 0,26 |
| C18:0 | 3,8 | 4,2 | 1,5 | 1,7 | 4,0 | 3,78 |
| C18:1 | 77,4 | 25,5 | 12,9 | 11,7 | 22,0 | 57,75 |
| C18:2 (n-6) | 13,3 | 63,0 | 45,7 | 1,3 | 16,0 | 26,47 |
| C18:3 (n-3) | 0,1 | | 13,9 | 0,9 | 52,0 | 3,11 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | | 0,13 |
| C20:1 | 0,2 | | 0,5 | 5,5 | | 0,31 |
| C20:5 (n-3) | | | | 19,5 | | 0,58 |
| C22:0 | 1,0 | 0,6 | | | | 0,79 |
| C22:1 | | | | 4,0 | | 0,12 |
| C22:5 (n-3) | | | | 2,6 | | 0,08 |
| C22:6 (n-3) | | | | 12,2 | | 0,37 |
| | | | | | | |
| % d'huile | 64 | 25 | 3 | 3 | 5 | 100 |
| | | | | | | |
| AG saturés (%) | | | | | | 9,92 |
| AG monoinsat (%) | | | | | | 58,44 |
| AG polyinsat (%) | | | | | | 31,31 |
| Total AG n-6 (%) | | | | | | 26,97 |
| Total AG n-3 (%) | | | | | | 4,33 |
| | | | | | | |
| Rapport n-6/n-3 | | | | | | 6,23 |

**TABLEAU 19**

| Acides gras (en %) | HOSFO | SFO | Huile de cassis | Huile de poisson | Huile de rosa mosq | Mélange |
|---|---|---|---|---|---|---|
| C14:0 | | | | 5,7 | | 0,17 |
| C16:0 | 4,0 | 6,5 | 6,2 | 12,5 | 3,2 | 4,87 |
| C16:1 | | 0,1 | 0,4 | 7,4 | 0,1 | 0,26 |
| C18:0 | 3,8 | 4,2 | 1,5 | 1,7 | 1,7 | 3,64 |
| C18:1 | 77,4 | 25,5 | 12,9 | 11,7 | 14,2 | 57,25 |
| C18:2 (n-6) | 13,3 | 63,0 | 45,7 | 1,3 | 46,3 | 27,82 |
| C18:3 (n-3) | 0,1 | | 13,9 | 0,9 | 33,3 | 2,51 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,9 | 0,18 |
| C20:1 | 0,2 | | 0,5 | 5,5 | 0,2 | 0,32 |
| C20:5 (n-3) | | | | 19,5 | | 0,58 |
| C22:0 | 1,0 | 0,6 | | | 0,1 | 0,79 |
| C22:1 | | | | 4,0 | | 0,12 |
| C22:5 (n-3) | | | | 2,6 | | 0,08 |
| C22:6 (n-3) | | | | 12,2 | | 0,37 |
| | | | | | | |
| % d'huile | 64 | 24 | 3 | 3 | 6 | 100 |
| | | | | | | |
| AG saturés (%) | | | | | | 9,66 |
| AG monoinsat (%) | | | | | | 57,95 |
| AG polyinsat (%) | | | | | | 32,05 |
| Total AG n-6 (%) | | | | | | 28,32 |
| Total AG n-3 (%) | | | | | | 3,73 |
| | | | | | | |
| Rapport n-6/n-3 | | | | | | 7,59 |

**TABLEAU 20**

| Acides gras (en %) | HOSFO | SFO | Huile de cassis | Huile de poisson | Huile de rosa mosq | Mélange |
|---|---|---|---|---|---|---|
| C14:0 | | | | 5,7 | | 0,17 |
| C16:0 | 4,0 | 6,5 | 6,2 | 12,5 | 3,2 | 4,81 |
| C16:1 | | 0,1 | 0,4 | 7,4 | 0,1 | 0,26 |
| C18:0 | 3,8 | 4,2 | 1,5 | 1,7 | 1,7 | 3,59 |
| C18:1 | 77,4 | 25,5 | 12,9 | 11,7 | 14,2 | 57,02 |
| C18:2 (n-6) | 13,3 | 63,0 | 45,7 | 1,3 | 46,3 | 27,49 |
| C18:3 (n-3) | 0,1 | | 13,9 | 0,9 | 33,3 | 3,17 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,9 | 0,20 |
| C20:1 | 0,2 | | 0,5 | 5,5 | 0,2 | 0,32 |
| C20:5 (n-3) | | | | 19,5 | | 0,58 |
| C22:0 | 1,0 | 0,6 | | | 0,1 | 0,78 |
| C22:1 | | | | 4,0 | | 0,12 |
| C22:5 (n-3) | | | | 2,6 | | 0,08 |
| C22:6 (n-3) | | | | 12,2 | | 0,37 |
| | | | | | | |
| % d'huile | 64 | 22 | 3 | 3 | 8 | 100 |
| | | | | | | |
| AG saturés (%) | | | | | | 9,55 |
| AG monoinsat (%) | | | | | | 57,73 |
| AG polyinsat (%) | | | | | | 32,38 |
| Total AG n-6 (%) | | | | | | 27,98 |
| Total AG n-3 (%) | | | | | | 4,40 |
| | | | | | | |
| Rapport n-6/n-3 | | | | | | 6,37 |

**TABLEAU 21**

| Acides gras (en %) | HOSFO | SFO | Huile de cassis | Huile de poisson | Huile de luzerne | Mélange |
|---|---|---|---|---|---|---|
| C14:0 | | | | 5,7 | | 0,17 |
| C16:0 | 4,0 | 6,5 | 6,2 | 12,5 | 9,6 | 5,26 |
| C16:1 | | 0,1 | 0,4 | 7,4 | | 0,26 |
| C18:0 | 3,8 | 4,2 | 1,5 | 1,7 | 2,1 | 3,66 |
| C18:1 | 77,4 | 25,5 | 12,9 | 11,7 | 10,9 | 57,05 |
| C18:2 (n-6) | 13,3 | 63,0 | 45,7 | 1,3 | 41,4 | 27,53 |
| C18:3 (n-3) | 0,1 | | 13,9 | 0,9 | 34,0 | 2,55 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,7 | 0,17 |
| C20:1 | 0,2 | | 0,5 | 5,5 | 0,2 | 0,32 |
| C20:5 (n-3) | | | | 19,5 | | 0,58 |
| C22:0 | 1,0 | 0,6 | | | 0,6 | 0,82 |
| C22:1 | | | | 4,0 | | 0,12 |
| C22:5 (n-3) | | | | 2,6 | | 0,08 |
| C22:6 (n-3) | | | | 12,2 | | 0,37 |
| | | | | | | |
| % d'huile | 64 | 24 | 3 | 3 | 6 | 100 |
| | | | | | | |
| AG saturés (%) | | | | | | 10,08 |
| AG monoinsat (%) | | | | | | 57,75 |
| AG polyinsat (%) | | | | | | 31,80 |
| Total AG n-6 (%) | | | | | | 28,03 |
| Total AG n-3 (%) | | | | | | 3,77 |
| | | | | | | |
| Rapport n-6/n-3 | | | | | | 7,43 |

**TABLEAU 22**

| Acides gras (en %) | HOSFO | SFO | Huile de cassis | Huile de poisson | Huile de luzerne | Mélange |
|---|---|---|---|---|---|---|
| C14:0 | | | | 5,7 | | 0,17 |
| C16:0 | 4,0 | 6,5 | 6,2 | 12,5 | 9,6 | 5,32 |
| C16:1 | | 0,1 | 0,4 | 7,4 | | 0,26 |
| C18:0 | 3,8 | 4,2 | 1,5 | 1,7 | 2,1 | 3,62 |
| C18:1 | 77,4 | 25,5 | 12,9 | 11,7 | 10,9 | 56,76 |
| C18:2 (n-6) | 13,3 | 63,0 | 45,7 | 1,3 | 41,4 | 27,09 |
| C18:3 (n-3) | 0,1 | | 13,9 | 0,9 | 34,0 | 3,23 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,7 | 0,19 |
| C20:1 | 0,2 | | 0,5 | 5,5 | 0,2 | 0,32 |
| C20:5 (n-3) | | | | 19,5 | | 0,58 |
| C22:0 | 1,0 | 0,6 | | | 0,6 | 0,82 |
| C22:1 | | | | 4,0 | | 0,12 |
| C22:5 (n-3) | | | | 2,6 | | 0,08 |
| C22:6 (n-3) | | | | 12,2 | | 0,37 |
| | | | | | | |
| % d'huile | 64 | 22 | 3 | 3 | 8 | 100 |
| | | | | | | |
| AG saturés (%) | | | | | | 10,12 |
| AG monoinsat (%) | | | | | | 57,46 |
| AG polyinsat (%) | | | | | | 32,05 |
| Total AG n-6 (%) | | | | | | 27,59 |
| Total AG n-3 (%) | | | | | | 4,45 |
| | | | | | | |
| Rapport n-6/n-3 | | | | | | 6,20 |

### Exemple 23

### Poudre de lait

On prépare une poudre de lait entier à 28 % de matière grasse en utilisant comme phase grasse un mélange de 50 % de matière grasse lactique anhydre et de 50 % de composition lipidique de l'exemple 1. Après pasteurisation UHT d'un lait écrémé, puis concentration par évaporation jusqu'à 40 % de matières sèches, on y ajoute la phase grasse ayant été pasteurisée séparément par UHT, on homogénéise le mélange, on y injecte de l'azote, puis on le sèche par pulvérisation dans des conditions modérées.

## Revendications

1. Produit laitier contenant une composition lipidique nutritionnelle en remplacement de 50% de la matière grasse lactique, dans lequel la dite composition lipidique nutritionnelle est **caractérisée par le fait que** les acides gras des triglycérides comprennent, en poids, au plus 10 % d'acides gras saturés, 50 % à 70 % d'acides gras monoinsaturés et 30 à 40 % d'acides gras polyinsaturés, que les acides gras n-6 représentent 25 à 35 %, que le rapport pondéral des acides gras de la famille n-6 sur ceux de la famille n-3 est 4,5:1 à 8,5:1 et que les acides gras polyinsaturés comprennent une quantité efficace d'acides des familles n-3 et n-6 de degré d'insaturation 3 et plus.

2. Produit laitier selon la revendication 1, **caractérisé par le fait que** la composition lipidique nutritionnelle contient, en poids, 45 à 68 % d'huile d'olive, d'huile d'abricot, d'hybrides de tournesol et de carthame à haute teneur en acide oléique ou d'oléines d'huiles végétales.

3. Produit laitier selon la revendication 1, **caractérisé par le fait que** la composition lipidique nutritionnelle contient, en poids, 8 à 28 % d'huile de tournesol, d'huile de pépins de raisin, d'huile de passiflore, d'huile de tomate ou d'huile de carthame et 1 à 10 % d'une huile susceptible de fournir une quantité efficace d'acide de degré d'insaturation au moins 3, choisie parmi l'huile d'onagre, de bourrache et de l'huile de pépins de cassis.

4. Produit laitier selon la revendication 1, **caractérisé par le fait que** la composition lipidique nutritionnelle contient, en poids, 2 à 30 % d'huile de colza, d'huile de chia, d'huile de lin, d'huile de kiwi, d'huile de luzerne, d'huile de rosa mosqueta et 1 à 8 % d'huile d'organismes marins.

5. Produit laitier selon la revendication 1, **caractérisé par le fait que** la composition moyenne des acides gras des triglycérides principaux de la composition lipidique nutritionnelle est la suivante:
| Acide gras | % en poids |
|---|---|
| C16:0 | 3-8, |
| C18:0 | 1-5 |
| C18:1 | 50-65 |
| C18:2 | 20-35 |
| C18:3, n-6 (gamma) | 0,2-1 |
| C18:3, n-3 (alpha) | 1,5-4 |
| C18:4, n-3 | 0,1-0,5 |
| C20:5, n-3 (EPA) | 0,2-1 |
| C22:6, n-3 (DHA) | 0,1-0,8. |

6. Procédé de préparation d'un produit latier selon l'une des revendications 1 à 5, **caractérisé par le fait que**, pour préparer la composition lipidique nutritionnelle, on incorpore un antioxydant dans l'huile riche en acides gras monoinsaturés, que l'on mélange les différentes huiles en évitant des températures supérieures à 30°C et que l'on conditionne le mélange sous atmosphère inerte.

7. Lait entier, **caractérisé par le fait qu'**il contient 28% en poids de matière grasse, et que sa matière grasse est constituée d'un mélange contenant 50 % en poids de matière grasse lactique anhydre et 50 % en poids d'une composition lipidique nutritionnelle composée des huiles raffinées suivantes, dans les proportions pondérales indiquées:
| **Huile** | **%** |
|---|---|
| Huile de tournesol hybride contenant 77,4 % d'acide oléique en poids des acides gras (HOSFO) | 50 |
| | |
| Huile de colza | 24 |
| | |
| Huile de tournesol (SFO) | 20 |
| | |
| Huile de pépins de cassis | 3 |
| | |
| Huile de poisson | 3 |

## Patentansprüche

1. Milchprodukt, das eine Lipidzusammensetzung für Nahrungsmittelzwecke als Ersatz für 50% des Milchfetts enthält und bei dem die Lipidzusammensetzung für Nahrungsmittelzwecke **dadurch gekennzeichnet ist, daß** die Fettsäuren der Triglyceride, in Gewicht, höchstens 10% gesättigte Fettsäuren, 50% bis 70% einfach ungesättigte Fettsäuren und 30 bis 40% mehrfach ungesättigte Fettsäuren umfassen, daß die Fettsäuren der Familie n-6 25 bis 35% ausmachen, daß das Gewichtsverhältnis der Fettsäuren der Familie n-6 zu denen der Familie n-3 4,5:1 bis 8,5:1 beträgt und daß die mehrfach ungesättigten Fettsäuren eine wirksame Menge an Säuren der Familien n-3 und n-6 mit einem Ungesättigtheitsgrad von 3 und mehr umfassen.

2. Milchprodukt nach Anspruch 1, **dadurch gekennzeichnet, daß** die Lipidzusammensetzung für Nahrungsmittelzwecke, in Gewicht, 45 bis 68% Olivenöl, Aprikosenöl, Öl von Sonnenblumen- und Saflorhybriden mit einem hohen Gehalt an Ölsäure oder Oleine von Pflanzenölen enthält.

3. Milchprodukt nach Anspruch 1, **dadurch gekennzeichnet, daß** die Lipidzusammensetzung für Nahrungsmittelzwecke, in Gewicht, 8 bis 28% Sonnenblumenöl, Traubenkernöl, Passionsblumenöl, Tomatenöl oder Safloröl und 1 bis 10% eines Öls enthält, das geeignet ist, eine wirksame Menge einer Säure mit einem Ungesättigtheitsgrad von wenigstens 3 bereitzustellen, das ausgewählt ist aus Nachtkerzenöl, Borretschöl und Johannisbeerenkernöl.

4. Milchprodukt nach Anspruch 1, **dadurch gekennzeichnet, daß** die Lipidzusammensetzung für Nahrungsmittelzwecke, in Gewicht, 2 bis 30% Rapsöl, Chiaöl, Leinöl, Kiwiöl, Luzerneöl, Moschusrosenöl und 1 bis 8% eines Seetieröls enthält.

5. Milchprodukt nach Anspruch 1, **dadurch gekennzeichnet, daß** die mittlere Zusammensetzung der Fettsäuren der Haupttriglyceride in der Lipidzusammensetzung für Nahrungsmittelzwecke die folgende ist:
| Fettsäure | Gew.-% |
|---|---|
| C16:0 | 3-8 |
| C18:0 | 1-5 |
| C18:1 | 50-65 |
| C18:2 | 20-35 |
| C18:3, n-6 (gamma) | 0,2-1 |
| C18:3, n-3 (alpha) | 1,5-4 |
| C18:4, n-3 | 0,1-0,5 |
| C20:5, n-3 (EPA) | 0,2-1 |
| C22:6, n-3 (DHA) | 0,1-0,8. |

6. Verfahren zur Herstellung eines Milchprodukts nach einem der Ansprüche 1 bis 5, **dadurch gekennzeichnet, daß** man zur Herstellung der Lipidzusammensetzung für Nahrungsmittelzwecke in das an einfach ungesättigten Fettsäuren reiche Öl ein Antioxidans einführt, die verschiedenen Öle unter Vermeidung von Temperaturen von mehr als 30°C mischt und die Mischung unter einer Inertatmosphäre konditioniert.

7. Vollmilch, **dadurch gekennzeichnet, daß** sie 28 Gew.-% Fett enthält und daß ihr Fett aus einer Mischung besteht, die 50 Gew.-% wasserfreies Milchfett und 50 Gew.-% einer Lipidzusammensetzung für Nahrungsmittelzwecke enthält, die aus den folgenden raffinierten Ölen in den angegebenen Gewichtsverhältnissen besteht:
| **Öl** | **%** |
|---|---|
| Öl von Sonnenblumenhybriden, das 77,4% Ölsäure vom Gewicht der Fettsäuren enthält (HOSFO) | 50 |
| Rapsöl | 24 |
| Sonnenblumenöl (SFO) | 20 |
| Johannisbeerenkernöl | 3 |
| Fischöl | 3 |

## Claims

1. Dairy product containing a nutritional lipid composition replacing 50 % of the milk fat, wherein the said nutritional lipid composition is **characterised in that** the fatty acids of the triglycerides comprise, by weight, at most 10 % saturated fatty acids, 50 % to 70 % mono-unsaturated fatty acids and 30 to 40 % polyunsaturated fatty acids, that the n-6 fatty acids represent 25 to 35 %, that the weight ratio of fatty acids of the n-6 family to those of the n-3 family is 4.5:1 to 8.5:1 and that the polyunsaturated fatty acids comprise an effective quantity of acids of the n-3 and n-6 family with a degree of unsaturation of 3 and above.

2. Dairy product according to claim 1, **characterised in that** the nutritional lipid composition contains, by weight, 45 to 68 % of olive oil, apricot oil, hybrid sunflower oil and hybrid safflower oil, with a high content of oleic acid or vegetable oil oleins.

3. Dairy product according to claim 1, **characterised in that** the nutritional lipid composition contains by weight, 8 to 28 % of sunflower oil, grape seed oil, passionflower oil, tomato oil or safflower oil and 1 to 10 % of an oil capable of providing an effective quantity of acid with a degree of unsaturation of at least 3, chosen from evening primrose oil, borage oil and blackcurrant seed oil.

4. Dairy product according to claim 1, **characterised in that** the nutritional lipid composition contains, by weight, 2 to 30 % of rapeseed oil, chia oil, linseed oil, kiwi oil, lucerne oil, rosa mosqueta oil and 1 to 8 % of oil from marine organisms.

5. Dairy product according to claim 1, **characterised in that** the average composition of the principal fatty acids of the triglycerides of the nutritional lipid composition is as follows :
| **Fatty acid** | **% by weight** |
|---|---|
| C16:0 | 3-8 |
| C18:0 | 1-5 |
| C18:1 | 50-65 |
| C18:2 | 20-35 |
| C18:3, n-6 (gamma) | 0.2-1 |
| C18:3 n-3 (alpha) | 1.5-4 |
| C18:4, n-3 | 0.1-0.5 |
| C20:5, n-3 (EPA) | 0.2-1 |
| C22:6, n-3 (DHA) | 0.1-0.8 |

6. Method for preparing a dairy product according to one of claims 1 to 5, **characterised in that**, in order to prepare the nutritional lipid composition, an antioxidant is incorporated in oil rich in mono-unsaturated fatty acids, that the different oils are mixed while avoiding temperatures above 30°C and that the mixture is packaged under an inert atmosphere.

7. Whole milk, **characterized in that** it contains 28 % fats by weight and that its fats consist of a mixture containing 50 % by weight of anhydrous milk fats and 50 % by weight of a nutritional lipid composition composed of the following refined oils, in the weight proportions indicated:
| **Oil** | **%** |
|---|---|
| Hybrid sunflower oil containing 77.4 % by weight of oleic acid based on the fatty acids (HOSFO) | 50 |
| Rapeseed oil | 24 |
| Sunflower oil (SFO) | 20 |
| Blackcurrant seed oil | 3 |
| Fish oil | 3 |
